# EUROPEAN PATENT APPLICATION

(11) **EP 4 621 960 A1**
(43) Date of publication of application: **24.09.2025**
(21) Application number: 24192833.2
(22) Date of filing: 05.08.2024
(51) Int. Cl.: H01M 50/224, H01M 50/229, H01M 50/231, H01M 50/242, H01M 50/249

(54) **COMPOSITE BOTTOM GUARD, BATTERY, AND ELECTRICAL DEVICE**

(30) Priority: 21.03.2024 CN 202420564643 U; 30.04.2024 WO PCT/CN2024/091002
(71) Applicant: Eve Energy Co., Ltd., Huizhou, Guangdong 516006 (CN)
(72) Inventor: DING, Xunfeng, Huizhou.Guangdong, 516006 (CN); ZHOU, Hongquan, Huizhou.Guangdong, 516006 (CN)
(74) Representative: Herrero & Asociados, S.L.

(57) **Abstract**

The present disclosure provides a composite bottom guard, a battery, and an electrical device. The composite bottom guard includes a first plate, a second plate, and a metal plate. The first plate and the second plate enclose to define a first holding cavity, and the metal plate is filled in the first holding cavity; or, the composite bottom guard further includes a third plate and a honeycomb plate, the third plate and the second plate enclose to define a second holding cavity, one of the metal plate and the honeycomb plate is filled in the first holding cavity, and the other of the metal plate and the honeycomb plate is filled in the second containment cavity.

## Description

### TECHNICAL FIELD

The present disclosure relates to the technical field of batteries, and in particular to a composite bottom guard, a battery, and an electrical device.

### BACKGROUND

As the most important structural load-bearing part of a battery pack, the battery bottom guard has an important impact on the safety, light weight, and corrosion resistance of the entire battery system. The main materials used for the battery bottom guard in the related art are steel guard plate or composite steel guard plate, which have excellent processing and welding performance. In a case where the battery is mounted on a chassis of a vehicle (such as electric vehicle), when the vehicle is traveling in actual road conditions, the battery is susceptible to bottoming scraping or bottoming out conditions, and the steel guard plate or composite steel guard plate can play a protective role for the battery.

However, the weight of the steel guard plate or composite steel guard plate is large, rigidity is poor, and in the event of bottoming scraping or bottoming out, the steel guard or composite steel guard is prone to extrusion and deformation, which may result in damage to the battery pack or even cause a fire, reducing the safety of the battery.

### SUMMARY OF THE DISCLOSURE

In a first aspect, the present disclosure provides a composite bottom guard, including a first plate, a second plate, and a metal plate that are stacked; the first plate and an upper surface of the second plate enclose to define a first holding cavity;

the metal plate has a cavity inside, and the metal plate is filled and mounted in the first holding cavity; or, the composite bottom guard further includes a third plate and a honeycomb plate, the third plate and a lower surface of the second plate enclose to define a second holding cavity, one of the metal plate and the honeycomb plate is filled and mounted in the first holding cavity, and the other of the metal plate and the honeycomb plate is filled and mounted in the second containment cavity.

In a second aspect, the present disclosure provides a battery, including a battery pack and the composite bottom guard as above; the first plate of the composite bottom guard is mounted on a bottom of the battery pack.

In a third aspect, the present disclosure provides an electrical device, including an electrical body and the battery as above; the battery is configured to supply electricity to the electrical body.

### BRIEF DESCRIPTION OF THE DRAWINGS

FIG. 1 is a disassembled structural schematic view of a composite bottom guard according to some embodiments of the present disclosure.
FIG. 2 is a partial longitudinal cross-sectional view of a composite bottom guard according to some embodiments of the present disclosure.
FIG. 3 is a partially enlarged view at A in FIG. 1.
FIG. 4 is a partially enlarged view at B in FIG. 1.
FIG. 5 is a top view of a second plate according to other embodiments of the present disclosure.
FIG. 6 is a disassembled structural schematic view of a composite bottom guard according to other embodiments of the present disclosure.
FIG. 7 is a partial longitudinal cross-sectional view of a composite bottom guard according to other embodiments of the present disclosure.
FIG. 8 is a partially enlarged view at C in FIG. 6.
FIG. 9 is a partially enlarged view at D in FIG. 6.
FIG. 10 is a cross-sectional view of a second plate according to other embodiments of the present disclosure.
FIG. 11 is a disassembled structural schematic view of a composite bottom guard according to further other embodiments of the present disclosure.
FIG. 12 is a partially enlarged view at E in FIG. 11.
FIG. 13 is a structural schematic view of a fiber according to some embodiments of the present disclosure.
FIG. 14 is a perspective structural schematic view of a battery according to some embodiments of the present disclosure.
FIG. 15 is a perspective structural schematic view of an electrical device according to some embodiments of the present disclosure.

Reference numerals:
1, first plate; 10, first holding cavity; 11, third hole; 121, warp fiber bundle; 122, weft fiber bundle; 2, second plate; 21, first limiting groove; 211, first side; 212, second side; 22, second hole; 23, second limiting groove; 3, third plate; 30, second holding cavity; 31, split plate; 32, first hole; 4, metal plate; 41, cavity; 5, honeycomb plate; 100, battery; 200, electrical device.

### DETAILED DESCRIPTION

Embodiments of the present disclosure propose a battery including a battery pack and a composite bottom guard, the composite bottom guard being mounted on a bottom of the battery pack to protect the battery pack. The battery can be mounted on a vehicle chassis as a power battery of a new energy vehicle. Of course, the battery can be applied in other power equipment, which is not specifically limited herein.

In the related art, the bottom guard is mainly adopted with materials for a steel guard plate or a composite steel guard plate. When the vehicle is traveling in actual road conditions, the battery is susceptible to bottoming scraping or bottoming out conditions. Since the weight of the steel guard plate or composite steel guard plate is large, rigidity is poor, in the event of bottoming scraping or bottoming out, the steel guard or composite steel guard is prone to extrusion and deformation, which may result in damage to the battery pack or even cause a fire, reducing the safety of the battery.

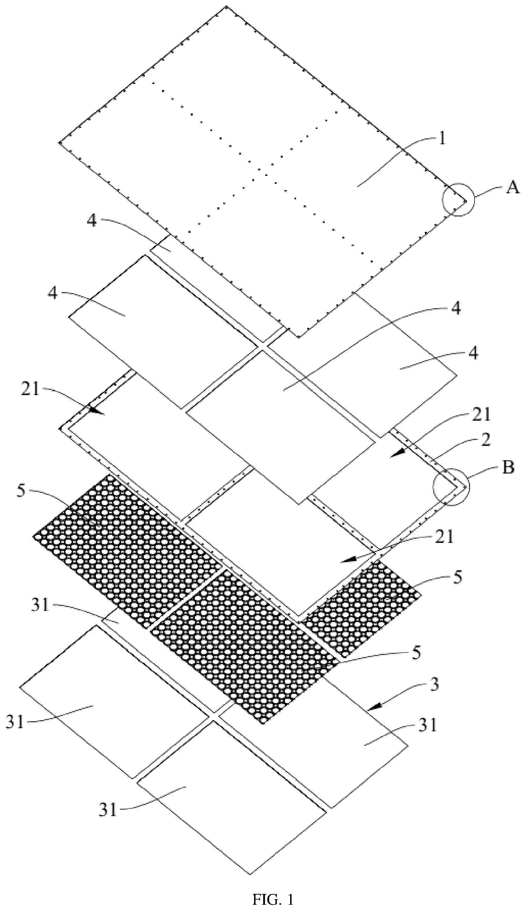

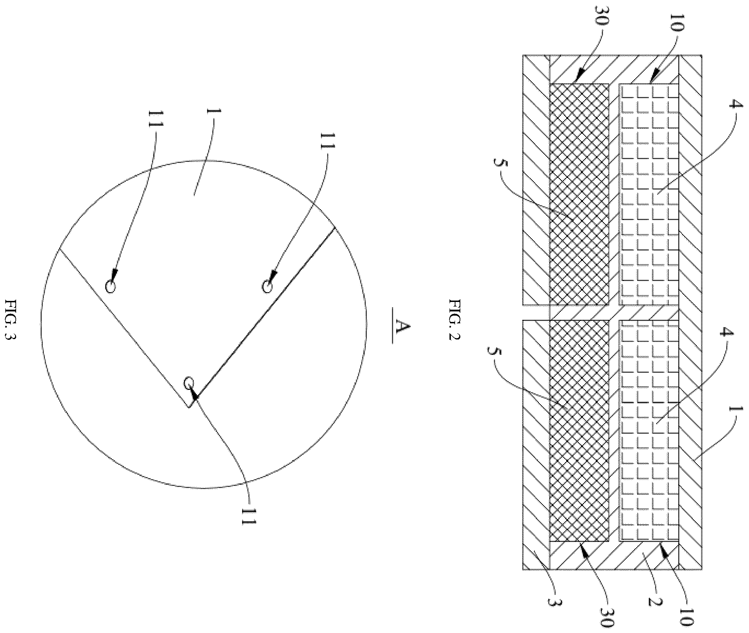

Based on this, as shown in FIGS. 1 and 2, the present embodiments further propose a composite bottom guard, including a first plate 1, a second plate 2, a third plate 3, a metal plate 4, and a honeycomb plate 5 that are stacked; where the first plate 1 and an upper surface of the second plate 2 enclose to define a first holding cavity 10, and the third plate 3 and a lower surface of the second plate 2 enclose to define a second holding cavity 30. One of the metal plate 4 and the honeycomb plate 5 is filled and mounted in the first holding cavity 10, and the other of the metal plate 4 and the honeycomb plate 5 is filled and mounted in the second containment cavity 30, so as to form a five-layer structure of the composite bottom guard. The metal plate 4 may improve the structural strength of the composite bottom guard, thereby improving the composite bottom guard's resistance to extrusion in the event of bottom scraping or bottoming out of the battery. In addition, the honeycomb plate 5 has a good cushioning effect and may form a buffer space inside the composite bottom guard to absorb extrusion energy and collision energy in the event of bottom scraping or bottoming out of the battery, thereby reducing the amount of deformation of the composite bottom guard, avoiding deformation of the battery pack, and thus improving the protection effect of the battery pack.

As shown in FIG. 1, the metal plate 4 is filled and mounted in the first holding cavity 10, closer to the bottom of the battery pack. The honeycomb plate 5 is filled and mounted in the second containment cavity 30 and is located below the metal plate 4. In other embodiments, the mounting positions of the metal plate 4 and the honeycomb plate 5 are interchanged, i.e., the honeycomb plate 5 is filled and mounted in the first holding cavity 10, closer to the bottom of the battery pack, and the metal plate 4 is filled and mounted in the second containment cavity 30 and located below the honeycomb plate 5.

Specifically, the first plate 1, the second plate 2, the third plate 3, the metal plate 4, and the honeycomb plate 5 are composited into a single body by a hot-pressing process. In this way, the structural strength of the composite bottom guard is improved. In addition, the hot-pressing process improves the production efficiency of the composite bottom guard. In other embodiments, the first plate 1, the second plate 2, the third plate 3, the metal plate 4 and the honeycomb plate 5 are bonded together to improve the structural strength of the composite bottom guard. The bonding assembly method is simple and easy to implement, thereby reducing the cost of the composite bottom guard and improving the production efficiency.

As shown in FIGS. 1, 2, and 10, a first limiting groove 21 is defined on an upper surface of the second plate 2, and a second limiting groove 23 is defined on a lower surface of the second plate 2. The first plate 1 is affixed to a peripheral edge of the upper surface of the second plate 2, and encloses with the first limiting groove 21 to define the first holding cavity 10. The third plate 3 is affixed to a peripheral edge of the lower surface of the second plate 2, and encloses with the second limiting groove 23 to define the second holding cavity 30. The first limiting groove 21 is filled with the metal plate 4 and the second limiting groove 23 is filled with the honeycomb plate 5, so as to limit and fix the metal plate 4 and the honeycomb plate 5, respectively, thereby realizing a stable assembly of the metal plate 4 and the honeycomb plate 5. When the battery is scraped or bottomed, the third plate 3 is subjected to extrusion and impact, in which case the honeycomb plate 5 is deformed and is able to absorb most of the extrusion energy and collision energy, reducing the amount of deformation of the composite bottom guard, and the metal plate 4 is able to improve the structural strength of the composite bottom guard, such that the first plate 1 which is closer to the battery pack is not deformed or only slightly deformed, which greatly improves the safety of the battery pack.

As shown in FIGS. 3, 4, 11, and 12, the third plate 3 defines a first hole 32, and the second plate 2 defines a second hole 22, the second hole 22 being coaxially provided with the first hole 32. The first plate 1 defines a third hole 11, the third hole 11 being coaxially provided with the first hole 32. A fastener can be threaded through the first hole 32, the second hole 22, and the third hole 11 in turn, in order to lock the third plate 3, the second plate 2, and the first plate 1 to the battery pack. The third plate 3, the second plate 2, and the first plate 1 are locked to the bottom of the battery pack. The fastener may be bolts or pins, etc., so as to enable the first plate 1, the second plate 2, and the third plate 3 to be fixedly assembled with the battery pack by means of bolting or riveting, which may improve the strength and stability of a connection between the composite bottom guard and the battery pack. In other embodiments, the first plate 1 is bonded (adhesively connected) to the bottom of the battery pack. The bonding assembly method is simple and easy to implement, which reduces cost and improves production efficiency.

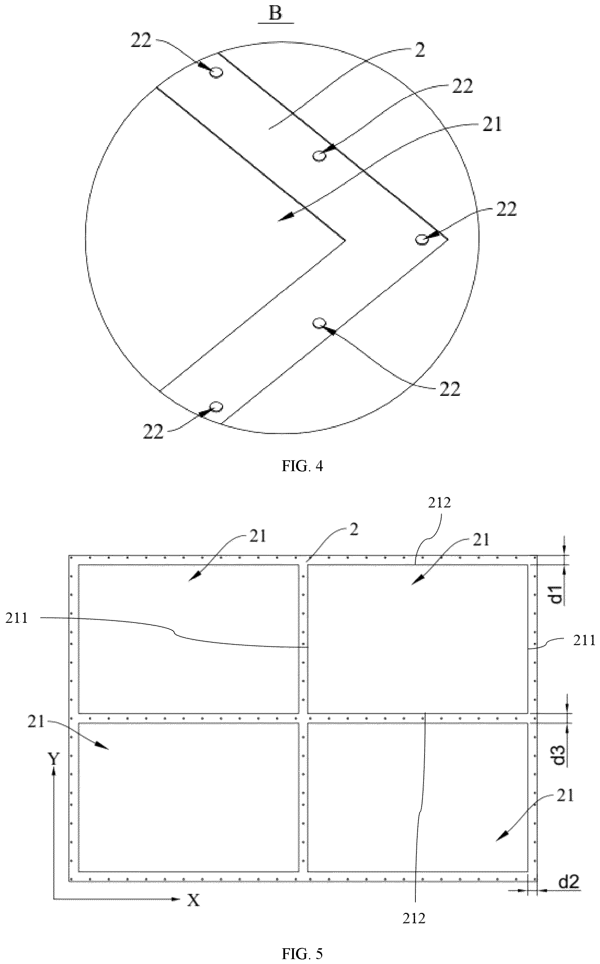

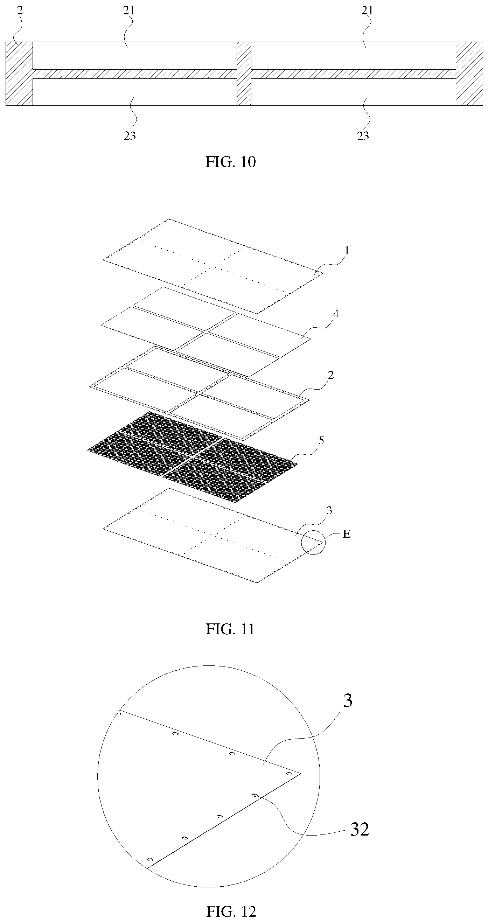

It is to be noted that an intermediate beam of the battery pack includes an X-direction beam and a Y-direction beam crosswise set in a cross shape, and the fixed positions of the X-direction beam and the Y-direction beam can be moved in the X-direction or the Y-direction according to the layout position of the cells. As shown in FIGS. 5 and 10, in the embodiments, the upper surface of the second plate 2 is provided with four the first limiting grooves 21 arrayed along the X-direction and the Y-direction, and the lower surface of the second plate 2 is provided with four the second limiting grooves 23 arrayed along the X-direction and the Y-direction. The third plate 3 includes four split plates 31, and each of the four split plates 31 encloses with a corresponding second limiting groove 23 to define the second holding cavity 30. The four split plates 31 enclose a cross-shaped groove (i.e., a mounting area of the intermediate beam) between them that is adapted to the intermediate beam to facilitate the assembly of the second plate 2 with the intermediate beam. Four the honeycomb plates 5 are arranged, and each of the four honeycomb plates 5 is mounted in a corresponding second limiting groove 23. In other embodiments, when the intermediate beam of the battery pack excludes the Y-direction beam, the upper surface of the second plate 2 is provided with two the first limiting grooves 21 spaced apart along the Y-direction, and the lower surface of the second plate 2 is provided with two the second limiting grooves 23 spaced apart along the Y-direction. The third plate 3 includes two split plates 31, and each of the two split plates 31 encloses with a corresponding second limiting groove 23 to define the second holding cavity 30. A straight-line groove (i.e., a mounting area of the intermediate beam) adapted to the intermediate beam is enclosed between the two split plates 31 to facilitate the assembly of the second plate 2 with the intermediate beam. Two the honeycomb plates 5 are arranged, and each of the two honeycomb plates 5 is mounted in a corresponding second limiting groove 23.

As shown in FIG. 5, the first limiting groove 21 has two first sides 211 disposed opposite each other along the X-direction and two second sides 212 disposed opposite each other along the Y-direction; a spacing d2 between each first side 211 and an outer side of an adjacent second plate 2 along the Y-direction is from 20 mm to 300 mm; a spacing d1 between each second side 212 and an outer side of an adjacent second plate 2 along the X-direction is from 20 mm to 100 mm; a spacing d3 between the two adjacent second sides 212 of the two first limiting grooves 21 spaced apart in the Y direction is 20 mm to 50 mm. Specifically, d1 may be 20 mm, 30 mm, 40 mm, 50 mm, 60 mm, 70 mm, 80 mm, 90 mm, or 100 mm, etc.; d2 may be 20 mm, 50 mm, 100 mm 150 mm, 200 mm, 250 mm or 300 mm, etc.; d3 can be 20 mm, 30 mm, 40 mm or 50 mm, etc. By setting the sizes of d1, d2, and d3, the first limiting groove 21 and the second limiting groove 23 have a sufficient area to increase the area of the honeycomb plate 5 and the metal plate 4, thereby increasing the area of the buffer space of the composite bottom guard while ensuring the structural strength of the composite bottom guard, such that the honeycomb plate 5 is capable of absorbing as much as possible the extrusion energy and the collision energy of the battery in the event of bottoming scraping or bottoming out, so as to reduce the amount of deformation of the composite bottom guard. When d1, d2, and d3 are too small, the difficulty of assembling the first plate 1, the second plate 2, and the third plate 3 and the difficulty of assembling the composite bottom guard and the battery pack is increased, and the amount of metal plate 4 used is increased, which may increase the weight of the composite bottom guard. When d1, d2, and d3 are too large, the amount of honeycomb plate 5 used is reduced, such that the area of the buffer space of the composite bottom guard is reduced, which is not conducive to reducing the amount of deformation of the composite bottom guard.

It should be noted that the material of the honeycomb plate 5 is one of polypropylene, polyethylene, polycarbonate, polyphenylene ether, or polystyrene. The honeycomb plate 5 prepared by these materials has a higher structural strength, thereby avoiding fracture after being squeezed to achieve a better cushioning effect. In addition, it is easy to process and manufacture the honeycomb plate 5, which improves the manufacturing efficiency of the honeycomb plate 5 and reduces the production cost. Specifically, the honeycomb plate 5 includes a skin and honeycomb cores, and a surface of the skin is covered with the honeycomb cores to improve the cushioning effect of the honeycomb plate 5. The honeycomb core may be polygonal or circular, etc., and the specific structure and processing of the honeycomb plate 5 will not be repeated. In other embodiments, the honeycomb board 5 may be made of other materials, as long as it has a good cushioning effect.

Specifically, the thickness of the honeycomb plate 5 is 5 mm to 10 mm. The thickness of the honeycomb plate 5 may be 5 mm, 6 mm, 7 mm, 8 mm, 9 mm, or 10 mm, etc. The thickness of the honeycomb plate 5 is set to 5 mm to 10 mm to ensure that the honeycomb plate 5 has sufficient structural strength, and further ensure that the weight is lighter and occupies a smaller volume, which reduces the total weight of the composite bottom guard. When the thickness of the honeycomb plate 5 is too small, the structural strength of the honeycomb plate 5 is low, such that the cushioning effect is poor, and it is difficult to meet the use requirements of the composite bottom guard. When the thickness of the honeycomb plate 5 is too large, the weight of the honeycomb plate 5 is too large, making the total weight and occupied volume of the composite bottom guard greater.

The metal plate 4 is a solid steel plate or a solid aluminum plate. When the metal plate 4 is a solid steel plate, a galvanized steel plate or a tin-plated steel plate may be applied to improve the corrosion resistance of the steel plate. Of course, the surface of the solid steel plate may be processed by electrophoresis or powder coating for anti-corrosion process to ensure the anti-corrosion performance of the solid steel plate. When the metal plate 4 is a solid aluminum plate, an aluminum profile plate may be applied. The weight of the aluminum profile plate is lighter and the anti-corrosion effect is better, which reduces the weight of the composite bottom guard and has a certain cushioning effect.

Specifically, the thickness of the metal plate 4 is 0.6 mm to 1.5 mm. The thickness of the metal plate 4 may be 0.6 mm, 0.8 mm, 1 mm, 1.2 mm, or 1.5 mm, etc. Setting the thickness of the metal plate 4 to 0.6 mm to 1.5 mm may ensure that the metal plate 4 has sufficient structural strength, and further ensure that the weight is lighter, thereby reducing the total weight of the composite bottom guard. When the thickness of the metal plate 4 is too small, the structural strength of the metal plate 4 is low, and it is difficult to meet the use requirements of the composite bottom guard. When the thickness of the metal plate 4 is too large, the total weight and occupied volume of the composite bottom guard are larger, thereby increasing the total volume of the battery.

When the battery is scraped or bottomed, the third plate 3 is subjected to the most serious degree of extrusion and collision. Therefore, the thickness of the third plate 3 is greater than the thickness of the first plate 1 and the second plate 2, respectively, in order to make the structural strength of the third plate 3 higher, thereby avoiding a serious breakage of the third plate 3 and thus improving the safety of the battery. Specifically, the thickness of each of the first plate 1 and the second plate 2 may be 0.4 mm to 1 mm, and the thickness of the third plate 3 may be 0.6 mm to 1.5 mm. The thickness of the first plate 1 and the second plate 2 are equal, each of which may be 0.4 mm, 0.5 mm, 0.6 mm, 0.7 mm, 0.8 mm, 0.9 mm, or 1 mm, etc. The third plate 3 may have a thickness of 0.6 mm, 0.8 mm, 1 mm, 1.2 mm or 1.5 mm, etc. The thickness of each of the first plate 1 and the second plate 2 is set to 0.4 mm to 1 mm, and the thickness of the third plate 3 is set to 0.6 mm to 1.5 mm to ensure that the first plate 1, the second plate 2, and the third plate 3 have sufficient structural strength, and further ensure that the weight is lighter to reduce the total weight of the composite bottom guard. When the thickness of each of the first plate 1, the second plate 2, and the third plate 3 is too small, the structural strength of the composite bottom guard is low, and it is difficult to meet the use requirements. When the thickness of each of the first plate 1, the second plate 2, and the third plate 3 is too large, the total weight and occupied volume of the composite bottom guard are larger.

The material of the first plate 1, the second plate 2, and the third plate 3 is one of glass fiber, carbon fiber, boron fiber, ultra-high molecular weight polyethylene fiber, polypropylene, polyethylene, polycarbonate, polyphenylene ether, and polystyrene. By compositing the first plate 1, the second plate 2, and the third plate 3 with these materials, the overall structural strength of the composite bottom guard is improved.

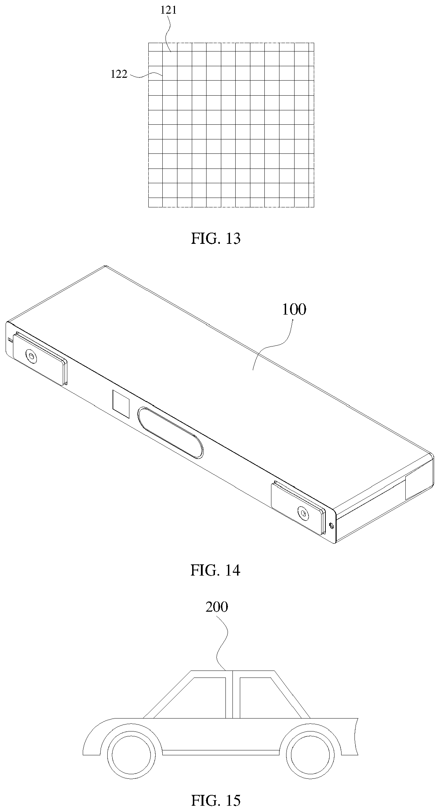

As shown in FIG. 13, when the material of the first plate 1, the second plate 2, and the third plate 3 is one of glass fiber, carbon fiber, boron fiber, and ultra-high molecular weight polyethylene fiber, the fiber includes a warp fiber bundle 121 and a weft fiber bundle 122. The warp fiber bundle 121 and the weft fiber bundle 122 are arranged in a crisscross configuration. The cross interlacing of the warp fiber bundle 121 and the weft fiber bundle 122 may improve the structural strength of the fibers, such that the first plate 1, the second plate 2, and the third plate 3 composited with the fibers have a high overall strength, thereby reducing the amount of deformation of the composite bottom guard in the event of bottoming scraping or bottoming out.

As shown in FIGS. 14 and 15, the present embodiment further proposes an electrical device 200 including an electrical body and a battery 100; the first plate 1 of the composite bottom guard is mounted on a bottom of the battery pack, and the battery 100 is configured to supply electricity to the electrical body. The electrical body may be a new energy vehicle. The composite bottom guard forms a five-layer plate structure, and the metal plate 4 improves the structural strength of the composite bottom guard, thereby improving the composite bottom guard's resistance to extrusion in the event of bottom scraping or bottoming out of the battery. In addition, the honeycomb plate 5 has a good cushioning effect and may form a buffer space inside the composite bottom guard to absorb extrusion energy and collision energy in the event of bottom scraping or bottoming out of the battery, thereby reducing the amount of deformation of the composite bottom guard, avoiding deformation of the battery pack, and thus improving the protection effect of the battery pack and the safety of the battery.

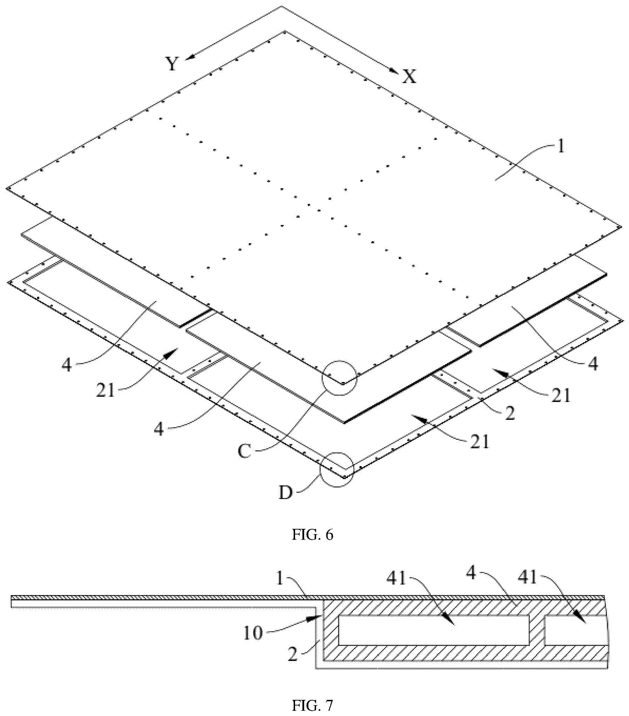

In other embodiments of the present disclosure, as shown in FIG. 6, the present embodiment proposes a composite bottom guard, which has basically the same structure as the composite bottom guard of the above embodiments, with the main difference that the composite bottom guard of the present embodiment has only a three-layer structure, and the composite bottom guard includes only a first plate 1, a second plate 2, and a metal plate 4 that are stacked; where the first plate 1 and an upper surface of the second plate 2 enclose to define a first holding cavity 10; the metal plate 4 has a cavity 41 inside, and the metal plate 4 is filled and mounted in the first holding cavity 10. It should be noted that the first plate 1 and the second plate 2 are composite resin plates, which improves the structural strength of the composite bottom guard, and thus improves the composite bottom guard's resistance to extrusion in the event of bottom scraping or bottoming out of the battery. In addition, by setting the metal plate 4 with the cavity 21 between the first plate 1 and the second plate 2, the composite bottom guard forms a three-layer plate structure, and a buffer space is formed between the first plate 1 and the second plate 2, so as to enable the metal plate 4 to absorb extrusion energy and collision energy in the event of bottom scraping or bottoming out of the battery, thereby reducing the amount of deformation of the composite bottom guard. In this way, the metal plate 4 may play a better buffer effect, avoiding deformation of the battery pack and improving the protection effect of the battery pack.

Specifically, the first plate 1, the second plate 2, and the metal plate 4 of the present embodiment are composited into a single body by a hot-pressing process, which improves the structural strength of the composite bottom guard. In addition, the hot-pressing process improves the production efficiency of the composite bottom guard. In other embodiments, the first plate 1, the second plate 2, and the metal plate 4 may be bonded together to improve the structural strength of the composite bottom guard. The bonding assembly method is simple and easy to implement, thereby reducing the cost of the composite bottom guard and improving the production efficiency.

As shown in FIGS. 6 and 7, a first limiting groove 21 is defined on an upper surface of the second plate 2, and the first plate 1 is affixed to a peripheral edge of the second plate 2 and encloses with the first limiting groove 21 to define the first holding cavity 10. The first limiting groove 21 is filled with the metal plate 4, which realizes limit fixation of the metal plate 4. An inner side of the second plate 2 (the side facing the first plate 1) defines the first limiting groove 21, and an outer side of the second plate 2 correspondingly forms a tab structure. In the event of bottoming scraping or bottoming out of the battery, the second plate 2 is subjected to extrusion impact, in which case the metal plate 4 is deformed and may absorb most of the extrusion energy and collision energy, reducing the amount of deformation of the composite bottom guard, such that the first plate 1 which is closer to the battery pack does not undergo deformation or only minor deformation occurs, which greatly improves the safety of the battery pack. It should be noted that since the peripheral edge of the second plate 2 is stacked on the first plate 1, there is no need to additionally arrange a reinforcing resin frame between the second plate 2 and the peripheral edge of the first plate 1, which simplifies the structure of the composite bottom guard and reduces the cost.

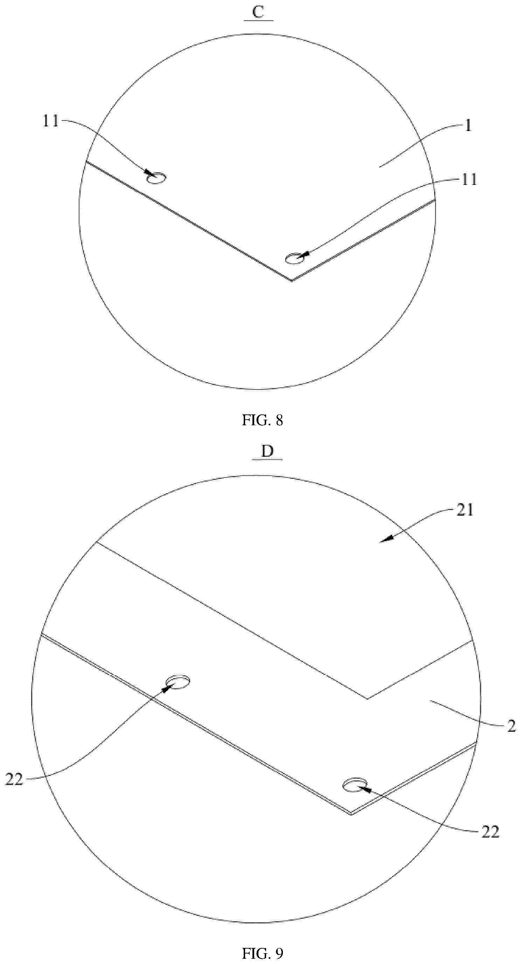

As shown in FIGS. 8 and 9, the second plate 2 defines a second hole 22, and the first plate 1 is coaxially provided with a third hole 11; a fastener can be sequentially threaded through the second hole 22 and the third hole 11, such that both the second plate 2 and the first plate 1 can be locked to the bottom of the battery pack. The fastener may be bolts or pins, etc., so as to enable the second plate 2 and the first plate 1 to be fixedly assembled with the battery pack by means of bolting or riveting, which may improve the strength and stability of a connection between the composite bottom guard and the battery pack. In other embodiments, the first plate 1 is bonded (adhesively connected) to the bottom of the battery pack. The bonding assembly method is simple and easy to implement, which reduces cost and improves production efficiency.

An intermediate beam of the battery pack includes an X-direction beam and a Y-direction beam crosswise set in a cross shape, and the fixed positions of the X-direction beam and the Y-direction beam can be moved in the X-direction or the Y-direction according to the layout position of the cells. The inner side of the second plate 2 is provided with four the first limiting grooves 21 arrayed along the X-direction and the Y-direction; accordingly, the outer side of the second plate 2 has four tabs arrayed along the X-direction and the Y-direction, and the four tabs enclose a cross-shaped groove between them adapted to the intermediate beam, so as to facilitate the assembly of the composite bottom guard and the intermediate beam. Four the metal plate 4 are arranged, and each of the four metal plates 4 is mounted in a corresponding first limiting groove 21. In other embodiments, when the intermediate beam of the battery pack excludes the Y-direction beam, the inner side of the second plate 2 is provided with two the first limiting grooves 21 spaced apart along the Y-direction. Two the metal plates 4 are arranged, and each of the two metal plates 4 is mounted in a corresponding first limiting groove 21.

In this embodiment, the metal plate 4 is an aluminum profile plate, and the aluminum profile plate has a higher structural strength, thereby avoiding fracture after being extruded to have a better cushioning effect. Compared to the steel plate, the aluminum profile plate is lighter in weight, which reduces the weight of the composite bottom guard, and the aluminum profile plate has a better corrosion prevention effect. In addition, the aluminum profile plate can be applied directly through outsourcing without design and processing, which is less costly. In other embodiments, the metal plate 4 may be made of other materials, and as long as it has the cavity 21 to have a good cushioning effect.

In this embodiment, the aluminum profile plate is extruded in one piece to form at least one cavity 21 on the aluminum profile plate passing through along a length direction or a width direction, which improves the productivity and structural strength of the aluminum profile plate through the one-piece extrusion molding method. The cavity 21 may have a rectangular longitudinal cross-section. It is to be understood that the shape of the longitudinal cross-section of the cavity 21 may be circular, triangular, or other polygonal, which is not specifically limited herein. In other embodiments, the metal plate 4 may be formed by multiple aluminum profile plates that are welded. Specifically, the metal plate 4 includes multiple aluminum profile plates, the includes aluminum profile plates being welded together and enclosing to define the at least one cavity 21.

Specifically, the aluminum profile plate has a thickness of 8 mm to 16 mm, and the wall thickness of the aluminum profile plate is 1.5 mm to 4 mm. The aluminum profile plate may have a thickness of 8 mm, 10 mm, 12 mm, 14 mm, or 16 mm, etc. The wall thickness of the aluminum profile plate may be 1.5 mm, 2 mm, 2.5 mm, 3 mm, 3.5 mm, or 4 mm, etc. The above design may ensure that the aluminum profile plate has sufficient structural strength, and further ensure that the weight is lighter and occupies a smaller volume, which reduces the total weight of the composite bottom guard. When the thickness and wall thickness of the aluminum profile plate are too small, the structural strength of the aluminum profile plate is low, such that the buffer effect is poor, and it is difficult to meet the use requirements of composite bottom guard. When the thickness and wall thickness of the aluminum profile plate are too large, the weight of the aluminum profile plate is large, making the total weight and occupied volume of the composite bottom guard larger.

When the battery is scraped or bottomed, the second plate 2 is subjected to the most serious degree of extrusion and collision. Therefore, the thickness of the first plate 1 is less than the thickness of the second plate 2, so as to make the structural strength of the second plate 2 higher, thereby avoiding a serious breakage of the second plate 2 and thus improving the safety of the battery. Specifically, the thickness of the first plate 1 is 0.4 mm to 1 mm, and the thickness of the second plate 2 is 0.6 mm to 1.5 mm. The thickness of the first plate 1 may be 0.4 mm, 0.5 mm, 0.6 mm, 0.7 mm, 0.8 mm, 0.9 mm, or 1 mm, etc. The thickness of the second plate 2 may be 0.6 mm, 0.8 mm, 1 mm, 1.2 mm, or 1.5 mm, etc. The thickness of the first plate 1 is set to be 0.4 mm to 1 mm, and the thickness of the second plate 2 is set to be 0.6 mm to 1.5 mm, so as to ensure that the first plate 1 and the second plate 2 have sufficient structural strength, and further ensure that the weight is lighter, thereby reducing the total weight of the composite bottom guard. When the thickness of each of the first plate 1 and the second plate 2 is too small, the structural strength of the first plate 1 and the second plate 2 is low, and it is difficult to meet the use requirements of the composite bottom guard. When the thickness of each of the first plate 1 and the second plate 2 is too large, the total weight and occupied volume of the composite bottom guard are larger.

## Claims

1. A composite bottom guard, **characterized by** comprising a first plate (1), a second plate (2), and a metal plate (4) that are stacked; wherein the first plate (1) and an upper surface of the second plate (2) enclose to define a first holding cavity (10);
the metal plate (4) has a cavity (41) inside, and the metal plate (4) is filled and mounted in the first holding cavity (10); or, the composite bottom guard further comprises a third plate (3) and a honeycomb plate (5), the third plate (3) and a lower surface of the second plate (2) enclose to define a second holding cavity (30), one of the metal plate (4) and the honeycomb plate (5) is filled and mounted in the first holding cavity (10), and the other of the metal plate (4) and the honeycomb plate (5) is filled and mounted in the second containment cavity (30).

2. The composite bottom guard according to claim 1, wherein the first plate (1), the second plate (2), and the metal plate (4) are bonded together or composited into a single body by a hot-pressing process; or,
the first plate (1), the second plate (2), the third plate (3), the metal plate (4), and the honeycomb plate (5) are bonded together composited into a single body by a hot-pressing process.

3. The composite bottom guard according to claim 1 or 2, wherein in condition of the composite bottom guard not comprising the third plate (3) and the honeycomb plate (5), the metal plate (4) is made from an aluminum profile plate.

4. The composite bottom guard according to claim 3, wherein the aluminum profile plate is extruded in one piece to form at least one cavity (21) on the aluminum profile plate passing through along a length direction or a width direction; or,
the metal plate (4) comprises a plurality of the aluminum profile plates, the plurality of aluminum profile plates being welded together and enclosing to define at least one cavity (21).

5. The composite bottom guard according to claim 3, wherein the aluminum profile plate has a thickness of 8 mm to 16 mm, and a wall thickness of the aluminum profile plate is 1.5 mm to 4 mm.

6. The composite bottom guard according to any one of claims 1-5, wherein a material of the honeycomb plate (5) is one of polypropylene, polyethylene, polycarbonate, polyphenylene ether, and polystyrene; preferably, a thickness of the honeycomb plate (5) is 5 mm to 10 mm.

7. The composite bottom guard according to any one of claims 1-6, wherein in condition of the composite bottom guard comprising the third plate (3) and the honeycomb plate (5), the metal plate (4) is a solid steel plate or a solid aluminum plate; preferably, a thickness of the metal plate (4) is 0.6 mm to 1.5 mm; preferably, the first plate (1) is capable of being bonded to a bottom of a battery pack.

8. The composite bottom guard according to any one of claims 1-7, wherein a first limiting groove (21) is defined on an upper surface of the second plate (2), and the first plate (1) is affixed to a peripheral edge of the upper surface of the second plate (2) and encloses with the first limiting groove (21) to define the first holding cavity (10);
in condition of the composite bottom guard comprising the third plate (3) and the honeycomb plate (5), a second limiting groove (23) is defined on a lower surface of the second plate (2), and the third plate (3) is affixed to a peripheral edge of the lower surface of the second plate (2) and encloses with the second limiting groove (23) to define the second holding cavity (30).

9. The composite bottom guard according to claim 8, wherein the upper surface of the second plate (2) is provided with two the first limiting grooves (21) spaced along a Y-direction or the upper surface of the second plate (2) is provided with four the first limiting grooves (21) arrayed along an X-direction and a Y-direction;
in condition of the composite bottom guard comprising the third plate (3) and the honeycomb plate (5), the lower surface of the second plate (2) is provided with two the second limiting grooves (23) spaced along the Y-direction; the third plate (3) comprises two split plates (31), and each of the two split plates (31) encloses with a corresponding second limiting groove (23) to define the second holding cavity (30); or the lower surface of the second plate (2) is provided with four the second limiting grooves (23) arranged in an array along the X-direction and the Y-direction; the third plate (3) comprises four split plates (31), and each of the two split plates (31) encloses with a corresponding second limiting groove (23) to define the second holding cavity (30).

10. The composite bottom guard according to claim 9, wherein each first limiting groove (21) has two first sides (211) disposed opposite each other along the X-direction and two second sides (212) disposed opposite each other along the Y-direction; a spacing between each first side (211) and an outer side of a corresponding-adjacent second plate (2) along the Y-direction is from 20 mm to 300 mm; a spacing between each second side (212) and an outer side of a corresponding-adjacent second plate (2) along the X-direction is from 20 mm to 100 mm;
the two first limiting grooves (21) spaced along the Y-direction are denoted as a first groove and a second groove, and a spacing between one of the two second sides (212) of the first groove and one of the two second sides (212) of the second groove is 20 mm to 50 mm, the one of the two second sides (212) of the first groove and the one of the two second sides (212) of the second groove being adjacent to each other.

11. The composite bottom guard according to any one of claims 1-7, wherein the second plate (2) defines a second hole (22), and the first plate (1) defines a third hole (11), the second hole (22) being coaxially provided with the third hole (11); a fastener is capable of being threaded through the second hole (22) and the third hole (11) in turn to lock both the second plate (2) and the first plate (1) to a bottom of a battery pack;
in condition of the composite bottom guard comprising the third plate (3) and the honeycomb plate (5), the third plate (3) defines a first hole (32), the first hole (32) being coaxially provided with the second hole (22) and the third hole (11); the fastener is capable of being threaded through the first hole (32), the second hole (22), and the third hole (11) in turn to lock the third plate (3), the second plate (2), and the first plate (1) to the bottom of the battery pack.

12. The composite bottom guard according to any one of claims 1-7, wherein in condition of the composite bottom guard not comprising the third plate (3) and the honeycomb plate (5), a thickness of the first plate (1) is less than a thickness of the second plate (2); the thickness of the first plate (1) is 0.4 mm to 1 mm, and the thickness of the second plate (2) is 0.6 mm to 1.5 mm;
in condition of the composite bottom guard comprising the third plate (3) and the honeycomb plate (5), a thickness of the third plate (3) is greater than the thickness of the first plate (1) and the second plate (2), respectively; the thickness of each of the first plate (1) and the second plate (2) is 0.4 mm to 1 mm, and the thickness of the third plate (3) is 0.6 mm to 1.5 mm.

13. The composite bottom guard according to any one of claims 1-7, wherein a material of the first plate (1), the second plate (2), and the third plate (3) is one of glass fiber, carbon fiber, boron fiber, ultra-high molecular weight polyethylene fiber, polypropylene, polyethylene, polycarbonate, polyphenylene ether, and polystyrene; preferably, in condition of the material of the first plate (1), the second plate (2), and the third plate (3) being a fiber of one of glass fiber, carbon fiber, boron fiber, and ultra-high molecular weight polyethylene fiber, the fiber comprises a warp fiber bundle (121) and a weft fiber bundle (122); the warp fiber bundle (121) and the weft fiber bundle (122) are arranged in a crisscross configuration.

14. A battery, comprising a battery pack and the composite bottom guard according to any one of claims 1-13; wherein the first plate (1) of the composite bottom guard is mounted on a bottom of the battery pack.

15. An electrical device, comprising an electrical body and the battery according to claim 14; wherein the battery is configured to supply electricity to the electrical body.

## Amended claims

### Amended claims in accordance with Rule 137(2) EPC.

1. A composite bottom guard, **characterized by** comprising a first plate (1), a second plate (2), and a metal plate (4) that are stacked; wherein the first plate (1) and an upper surface of the second plate (2) enclose to define a first holding cavity (10);
the metal plate (4) has a cavity (41) inside, and the metal plate (4) is filled and mounted in the first holding cavity (10); or, the composite bottom guard further comprises a third plate (3) and a honeycomb plate (5), the third plate (3) and a lower surface of the second plate (2) enclose to define a second holding cavity (30), one of the metal plate (4) and the honeycomb plate (5) is filled and mounted in the first holding cavity (10), and the other of the metal plate (4) and the honeycomb plate (5) is filled and mounted in the second containment cavity (30).

2. The composite bottom guard according to claim 1, **characterized in that** the first plate (1), the second plate (2), and the metal plate (4) are bonded together or composited into a single body by a hot-pressing process; or,
the first plate (1), the second plate (2), the third plate (3), the metal plate (4), and the honeycomb plate (5) are bonded together composited into a single body by a hot-pressing process.

3. The composite bottom guard according to claim 1 or 2, **characterized in that** in condition of the composite bottom guard not comprising the third plate (3) and the honeycomb plate (5), the metal plate (4) is made from an aluminum profile plate.

4. The composite bottom guard according to claim 3, **characterized in that** the aluminum profile plate is extruded in one piece to form at least one cavity (21) on the aluminum profile plate passing through along a length direction or a width direction; or,
the metal plate (4) comprises a plurality of the aluminum profile plates, the plurality of aluminum profile plates being welded together and enclosing to define at least one cavity (21).

5. The composite bottom guard according to claim 3, **characterized in that** the aluminum profile plate has a thickness of 8 mm to 16 mm, and a wall thickness of the aluminum profile plate is 1.5 mm to 4 mm.

6. The composite bottom guard according to any one of claims 1-5, **characterized in that** a material of the honeycomb plate (5) is one of polypropylene, polyethylene, polycarbonate, polyphenylene ether, and polystyrene; preferably, a thickness of the honeycomb plate (5) is 5 mm to 10 mm.

7. The composite bottom guard according to any one of claims 1-6, **characterized in that** in condition of the composite bottom guard comprising the third plate (3) and the honeycomb plate (5), the metal plate (4) is a solid steel plate or a solid aluminum plate; preferably, a thickness of the metal plate (4) is 0.6 mm to 1.5 mm; preferably, the first plate (1) is capable of being bonded to a bottom of a battery pack.

8. The composite bottom guard according to any one of claims 1-7, **characterized in that** a first limiting groove (21) is defined on an upper surface of the second plate (2), and the first plate (1) is affixed to a peripheral edge of the upper surface of the second plate (2) and encloses with the first limiting groove (21) to define the first holding cavity (10);
in condition of the composite bottom guard comprising the third plate (3) and the honeycomb plate (5), a second limiting groove (23) is defined on a lower surface of the second plate (2), and the third plate (3) is affixed to a peripheral edge of the lower surface of the second plate (2) and encloses with the second limiting groove (23) to define the second holding cavity (30).

9. The composite bottom guard according to claim 8, **characterized in that** the upper surface of the second plate (2) is provided with two said first limiting grooves (21) spaced along a Y-direction or the upper surface of the second plate (2) is provided with four said first limiting grooves (21) arrayed along an X-direction and a Y-direction;
in condition of the composite bottom guard comprising the third plate (3) and the honeycomb plate (5), the lower surface of the second plate (2) is provided with two said second limiting grooves (23) spaced along the Y-direction; the third plate (3) comprises two split plates (31), and each of the two split plates (31) encloses with a corresponding second limiting groove (23) to define the second holding cavity (30); or the lower surface of the second plate (2) is provided with four said second limiting grooves (23) arranged in an array along the X-direction and the Y-direction; the third plate (3) comprises four split plates (31), and each of the two split plates (31) encloses with a corresponding second limiting groove (23) to define the second holding cavity (30).

10. The composite bottom guard according to claim 9, **characterized in that** each first limiting groove (21) has two first sides (211) disposed opposite each other along the X-direction and two second sides (212) disposed opposite each other along the Y-direction; a spacing between each first side (211) and an outer side of a corresponding-adjacent second plate (2) along the Y-direction is from 20 mm to 300 mm; a spacing between each second side (212) and an outer side of a corresponding-adjacent second plate (2) along the X-direction is from 20 mm to 100 mm;
the two first limiting grooves (21) spaced along the Y-direction are denoted as a first groove and a second groove, and a spacing between one of the two second sides (212) of the first groove and one of the two second sides (212) of the second groove is 20 mm to 50 mm, the one of the two second sides (212) of the first groove and the one of the two second sides (212) of the second groove being adjacent to each other.

11. The composite bottom guard according to any one of claims 1-7, **characterized in that** the second plate (2) defines a second hole (22), and the first plate (1) defines a third hole (11), the second hole (22) being coaxially provided with the third hole (11); a fastener is capable of being threaded through the second hole (22) and the third hole (11) in turn to lock both the second plate (2) and the first plate (1) to a bottom of a battery pack;
in condition of the composite bottom guard comprising the third plate (3) and the honeycomb plate (5), the third plate (3) defines a first hole (32), the first hole (32) being coaxially provided with the second hole (22) and the third hole (11); the fastener is capable of being threaded through the first hole (32), the second hole (22), and the third hole (11) in turn to lock the third plate (3), the second plate (2), and the first plate (1) to the bottom of the battery pack.

12. The composite bottom guard according to any one of claims 1-7, **characterized in that** in condition of the composite bottom guard not comprising the third plate (3) and the honeycomb plate (5), a thickness of the first plate (1) is less than a thickness of the second plate (2); the thickness of the first plate (1) is 0.4 mm to 1 mm, and the thickness of the second plate (2) is 0.6 mm to 1.5 mm;
in condition of the composite bottom guard comprising the third plate (3) and the honeycomb plate (5), a thickness of the third plate (3) is greater than the thickness of the first plate (1) and the second plate (2), respectively; the thickness of each of the first plate (1) and the second plate (2) is 0.4 mm to 1 mm, and the thickness of the third plate (3) is 0.6 mm to 1.5 mm.

13. The composite bottom guard according to any one of claims 1-7, **characterized in that** a material of the first plate (1), the second plate (2), and the third plate (3) is one of glass fiber, carbon fiber, boron fiber, ultra-high molecular weight polyethylene fiber, polypropylene, polyethylene, polycarbonate, polyphenylene ether, and polystyrene; preferably, in condition of the material of the first plate (1), the second plate (2), and the third plate (3) being a fiber of one of glass fiber, carbon fiber, boron fiber, and ultra-high molecular weight polyethylene fiber, the fiber comprises a warp fiber bundle (121) and a weft fiber bundle (122); the warp fiber bundle (121) and the weft fiber bundle (122) are arranged in a crisscross configuration.

14. A battery, **characterized by** comprising a battery pack and the composite bottom guard according to any one of claims 1-13; wherein the first plate (1) of the composite bottom guard is mounted on a bottom of the battery pack.

15. An electrical device, **characterized by** comprising an electrical body and the battery according to claim 14; wherein the battery is configured to supply electricity to the electrical body.
